# EUROPÄISCHE PATENTSCHRIFT

(11) **EP 1 985 468 B1**
(45) Veröffentlichungstag und Bekanntmachung des Hinweises auf die Patenterteilung: **17.03.2010**
(21) Anmeldenummer: 08150636.2
(22) Anmeldetag: 25.01.2008
(51) Int. Cl.: B60C 9/17

(54) **Reifen mit zwei asymmetrischen Halbkarkassen**
Tire with two asymmetric half carcasses
Pneu avec deux demi carcasses asymétriques

(30) Priorität: 26.04.2007 DE 102007019717
(43) Veröffentlichungstag der Anmeldung: 29.10.2008
(73) Patentinhaber: Continental Reifen Deutschland GmbH, 30165 Hannover (DE)
(72) Erfinder: Lampe, Gerhard, 30453 Hannover (DE)
(74) Vertreter: Finger, Karsten

(56) Entgegenhaltungen:
- GB-A- 1 115 834
- US-A- 3 339 610
- US-B1- 6 267 166

## Beschreibung

Die Erfindung betrifft einen Fahrzeugreifen mit einem Laufstreifen, einem Gürtel, Seitenwänden, Wulstkernen mit einem Kemprofil und mit mindestens zwei Einlagen mit Festigkeitsträgern.

Bei konventionellen Fahrzeugreifen ist bekannt, dass bei Mehrlagenreifen die Einlagen mit verschiedener Breite gefertigt werden. Diese Einlagen werden entsprechend zugeschnitten und sodann für die Fertigung vorbereitet. Ein Nachteil bei Mehrlagenreifen besteht darin, dass breite Wülste den Einsatz zusätzlicher Wulstbauteile, z.B. Wulstverstärker verhindern. Die EP 0 832 762 A2 zeigt einen konventionellen Fahrzeugreifen mit zwei übereinander liegenden Einlagen. Beide Einlagen umschlingen auf beiden Wulstseiten den Wulstkern, wodurch der Wulst eine entsprechende Breite besitzt.

Die US-B1-6 267 166, US-A-3 339 610 und GB-A- 1 115 834 offenbaren weitere Reifenkonstruktionen, bei denen die Einlagen unterschiedlich angeordnet sind.

Der Erfindung liegt die Aufgabe zugrunde, einen Fahrzeugreifen bereitzustellen, bei dem bei einem Mehrlagenreifen ein zu breiter Wulst vermieden wird.

Gelöst wird die Aufgabe gemäß Anspruch 1.

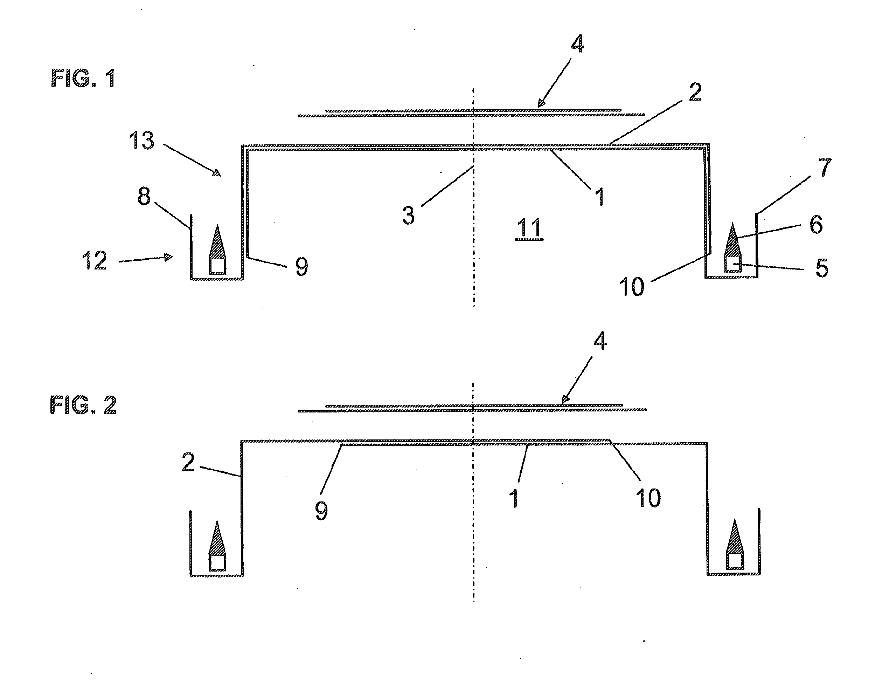

Die Ausführungsbeispiele in den Figuren 2 bis 4 sowie die entsprechenden Beschreibungsteile sind Beispiele, die zum Verständnis der Erfindung beitragen und mitunter nicht unter den Anspruch 1 fallen.

Ein Vorteil der Erfindung ist insbesondere darin zu sehen, dass erfindungsgemäß es sich um einen Mehrlagenreifen handelt und gleichzeitig jede einzelne Lage auf jeder Wulstseite den Wulstkern nur einmal umschlingt, wodurch insbesondere auf der Reifenaußenseite weniger Lagenstöße angeordnet sind. Dadurch reduziert man die Wulstbreite um ein erhebliches Maß und schafft dadurch Platz für zusätzliche Wulstbauteile, beispielsweise Wulstverstärkerstreifen, die die Fahreigenschaften des Fahrzeugreifens verbessern. Ferner wird erfindungsgemäß die Wulsthaltbarkeit des Reifenwulstes erhöht, da eine geringere mechanische Dauerbelastung außen am Lagenumschlag des Wulstes wirkt. Ein weiterer Vorteil besteht in der Kostensenkung bei Material- und Produktionskosten.

Erfindungsgemäß ist vorgesehen, dass die jeweils zur Wulstumschlingung gegenüberliegenden Enden der ersten und zweiten Einlage jeweils in dem Bereich neben dem Wulstkern oder dem Wulstkernverband aus Wulstkern sowie Kernprofil auf der Reifeninnenseite enden.
Auf diese Weise werden die Wulstkerne nicht doppelt umschlungen und gleichzeitig die Bereiche der Seitenwände vollständig doppellagig abgedeckt. Ein Fahrzeugreifen mit einer solchen zweilagigen Anordnung besitzt in den Seitenwänden eine hohe Stabilität.

In einer vorteilhaften Weiterbildung der Erfindung ist vorgesehen, dass die erste und zweite Einlage zwei gleichbreite Einlagen sind, wobei diese mit einem asymetrischen Mittenversatz zur radialen Reifenmitte im Fahrzeugreifen positioniert sind.
Dadurch wird auf einfache Weise ein Reifen mit einem asymmetrischen Aufbau erreicht. Der asymmetrische Mittenversatz der ersten Einlage hat insbesondere zur Folge, dass der Lagenumschlag der Einlage auf der Seite der Wulstumschlingung höher in der Seitenwand ausfällt. Dieser hohe Lagenumschlag ist beispielsweise dann vorteilhaft, wenn das Kernprofil eine bestimmte Höhe erreicht und dieses durch den Lagenumschlag vollständig abgedeckt werden soll.

In einer weiteren vorteilhaften Weiterbildung der Erfindung ist vorgesehen, dass die erste und die zweite Einlage unterschiedliche Festigkeitsträger-Materialien aufweisen.
Dadurch wird auf einfache Weise ein Reifen mit einem asymmetrischen Reifenaufbau erzielt.

In einer weiteren vorteilhaften Weiterbildung der Erfindung ist vorgesehen, dass die Festigkeitsträger-Materialien Rayon, Stahl, Polyester und/oder Hybrid-Werkstoffe umfassen.
Denkbar ist beispielsweise, dass die erste Einlage als Festigkeitsträgermaterial Stahlcordfestigkeitsträger enthält, wohingegen in der zweiten Einlage als Festigkeitsträgermaterialien ein Polyestermaterial eingesetzt wird. Dadurch würde auf einfache Weise der Fahrzeugreifen zwei unterschiedliche Eigenschaften in den beiden Seitenwänden besitzen. Als Hybrid-Werkstoff ist vorzusweise ein Material aus Polyester und Aramid einsetzbar.

In einer weiteren vorteilhaften Weiterbildung der Erfindung ist vorgesehen, dass die Festigkeitsträger in der ersten und zweiten Einlage in unterschiedlichen Winkellagen angeordnet sind. In der ersten Einlage könnten die Festigkeitsträger beispielsweise vollständig in radialer Richtung ausgerichtet sein, wohingegen in der zweiten Einlage die Festigkeitsträger diagonal ausgerichtet wären. Das Ergebnis wäre wiederum ein Reifen mit einem asymmetrischen Reifenaufbau und unterschiedlichen Eigenschaften in den entsprechenden Seitenwänden.

In einer weiteren vorteilhaften Weiterbildung der Erfindung ist vorgesehen, dass die jeweils gegenüberliegenden Kernprofile unterschiedliche Materialeigenschaften besitzen. Die Kernprofile könnten beispielsweise aus unterschiedlichen Gummimischungen mit unterschiedlichen Material-Härten bestehen. Das Ergebnis wäre ein Reifen mit einem asymmetrischen Reifenaufbau.

In einer weiteren vorteilhaften Weiterbildung der Erfindung ist vorgesehen, dass die jeweils gegenüberliegenden Kernprofile unterschiedliche Kernprofil-Höhen besitzen.
Auf diese Weise würde auf einfache Weise ein Reifen mit einem asymmetrischen Reifenaufbau erzielt werden.

Anhand der Figuren soll die Erfindung näher erläutert werden. Es zeigen:
- Fig. 1:: ein Ausführungsbeispiel mit zwei übereinanderliegenden Einlagen, bei denen die gegenüberliegenden Enden neben dem Reifenkern enden,
- Fig. 2:: ein ertes Beispiel, das das Verständnis der Erfindung erleichtert, bei dem die gegenüberliegenden Enden unterhalb des Gürtels enden,
- Fig. 3:: ein zweites Beispiel, das das Verständnis der Erfindung erleichtert, bei dem auf der rechten Wulstseite die erste Einlage als C-Lage ausgeführt ist,
- Fig. 4: ein drittes Beispiel, das das Verständnis der Erfindung erleichtert, bei dem beide Einlagen mit einem asymmetrischen Mittenversatz im Fahrzeugreifen positioniert sind.

Die Figur 1 zeigt ein Ausführungsbeispiel.
Der Fahrzeugreifen ist lediglich schematisch dargestellt und weist in dieser schematischen Darstellung die Einlagen 1 und 2, die Wulstkerne 5 mit dem Kernprofil 6 sowie den Gürtel 4 auf. Über dem schematisch dargestellten Reifenwulst 12 schließt sich die Reifenseitenwand 13 an. Die erste und die zweite Einlage sind übereinander angeordnet, jedoch außer mittig von der radialen Mittelachse 3 des Fahrzeugreifens. Die erste und die zweite Einlage 1 und 2 werden der Gestalt bei der Fertigung im Fahrzeugreifen positioniert, dass jede der Einlagen den Wulstkern auf jeder Seite nur einmal umschlingt. Die jeweils gegenüber liegenden Enden 9 und 10 reichen bei diesem Ausführungsbeispiel auf jeder Wulstseite bis neben den Wulstkern 5. Der Lagenhochschlag 7 der ersten Einlage 1 sowie der Lagenhochschlag der zweiten Einlage 2 überdecken auf beiden Wulstseiten die jeweiligen Kernprofile 6 vollständig. Diese Lagenanordnung hat insbesondere den Vorteil, dass trotz Einsatz von zwei Einlagen eine relativ schmale Wulstbreite erreicht wird. Dadurch kann der Reifenwulst mit weiteren Wulstbauteilen versehen werden, beispielsweise mit sogenannten Wulstverstärkern.

Die Figur 2 zeigt das erste Beispiel. Bei diesem Beispiel reichen die Enden 9 und 10 der ersten und zweiten Lage jeweils unterhalb des Gürtels 4. Auf diese Weise wird nur der Bereich unterhalb des Gürtels 4 zweilagig abgedeckt. Bei der ersten Einlage sind die Festigkeitsträger z.B. linkssteigend angeordnet, wohingegen bei der zweiten Einlage die Festigkeitsträger z.B. rechtssteigend angeordnet sind.

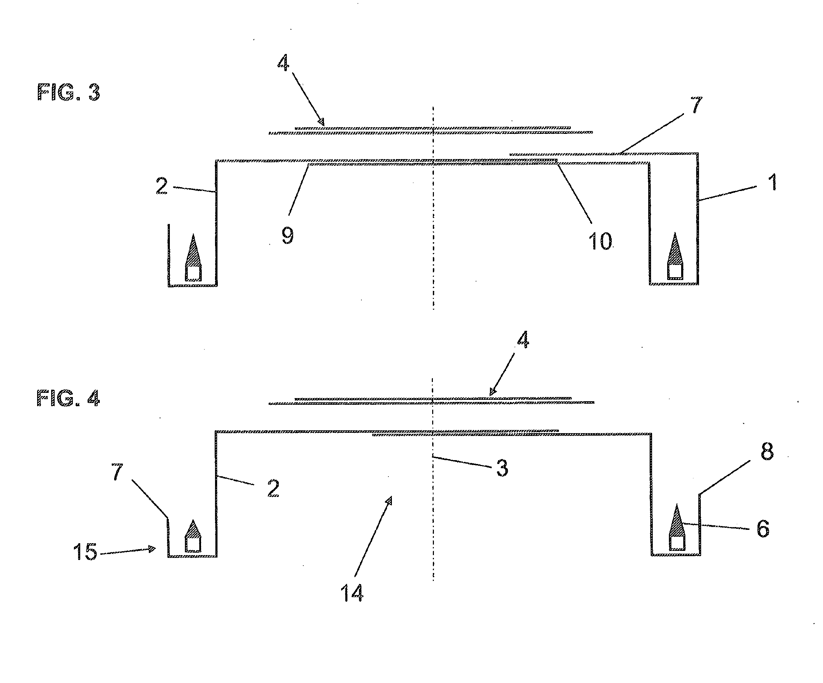

Fig. 3 zeigt das zweite Beispiel. Bei diesem Beispiel ist auf der rechten Wulstseite die erste Einlage 1 als sogenannte C-Lage ausgeführt. Der Lagenhochschlag 7 der ersten Einlage reicht bis unterhalb des Randbereiches des Gürtels 4. Dadurch wird ein Reifen mit einem asymmetrischen Reifenaufbau erreicht.

Fig. 4 zeigt ein drittes Beispiel. Bei diesem Beispiel sind die erste Einlage 1 und die zweite Einlage 2 gleich breit ausgeführt. Die erste Einlage 1 wird bei diesem Beispiel mit einem asymmetrischen Mittenversatz 14 der Gestalt im Fahrzeugreifen positioniert, dass der Lagenhochschlag 8 höher liegt als der Lagenhochschlag 7 der zweiten Einlage 2 auf der gegenüberliegenden Seite. Da bei diesem Beispiel die Kernprofile 6 auf der linken und auf der rechten Wulstseite unterschiedliche Höhen besitzen, werden durch den asymmetrischen Mittenversatz von erster und zweiter Einlage beide Kernprofile vollständig abgedeckt. Der Fahrzeugreifen bei diesem Beispiel besitzt ebenfalls einen asymmetrischen Reifenaufbau. Bei allen Beispiel der Figuren 1 bis 4 können vorzugsweise die Festigkeitsträger-Materialien der ersten und zweiten Einlage unterschiedlich sein. Weiterhin können sich die erste und die zweite Einlage dadurch unterscheiden, dass die Festigkeitsträger in den entsprechenden Einlagen in unterschiedlichen Winkeln zueinander angeordnet sind. Beispielsweise können in der ersten Einlage die Festigkeitsträger in radialer Richtung angeordnet sein, wohingegen die Festigkeitsträger in der zweiten Einlage in diagonaler Richtung ausgerichtet sind. Dadurch wird auf einfache Weise ein Fahrzeugreifen mit einem asymmetrischen Reifenaufbau erreicht.

### Bezugszeichenliste

### (ist Teil der Beschreibung)

- 1: erste Einlage
- 2: zweite Einlage
- 3: radiale Mittelachse des Fahrzeugreifens
- 4: Gürtel
- 5: Wulstkern
- 6: Kernprofil
- 7: Lagenhochschlag der 1. Einlage
- 8: Lagenhochschlag der 2. Einlage
- 9: gegenüberliegendes Ende der 1. Einlage
- 10: gegenüberliegendes Ende der 2. Einlage
- 11: Reifeninnenseite
- 12: Reifenwulst
- 13: Seitenwand
- 14: asymmetrischer Mittenversatz von 1. und 2. Einlage
- 15: Kernprofil auf der linken Wulstseite mit einer geringeren Höhe

## Patentansprüche

1. Fahrzeugreifen mit einem Laufstreifen, einem Gürtel (4) , Seitenwänden (13), Wulstkernen (5) mit einem Kernprofil (6) und mit mindestens zwei Einlagen (1,2) mit Festigkeitsträgern, wobei
die erste und die zweite Einlage (1,2) dergestalt außermittig von der radialen Mittelachse (3) des Fahrzeugreifens positioniert sind, dass sowohl ein Ende der ersten Einlage (1) als auch ein Ende der zweiten Einlage (2) auf jeder Wulstseite jeweils nur einen Wulstkern (5) umschlingen und die jeweils gegenüberliegenden Enden (9,10) bis maximal im Bereich neben dem Wulstkern (5) auf der Reifeninnenseite (11) reichen.
**dadurch gekennzeichnet, dass**
die jeweils zur Wulstumschlingung gegenüberliegenden Enden (9, 10) der ersten und zweiten Einlage (1, 2) jeweils in dem Bereich neben dem Wulstkern (5) oder dem Wulstkernverband aus Wulstkern (5) sowie Kernprofil (6) auf der Reifeninnenseite (11) enden.

2. Fahrzeugreifen nach nach Anspruch 1,
**dadurch gekennzeichnet, dass**
die erste und zweite Einlage (1, 2) zwei gleichbreite Einlagen sind, wobei diese mit einem asymmetrischen Mittenversatz (14) zur radialen Reifenmitte (3) im Fahrzeugreifen positioniert sind.

3. Fahrzeugreifen nach einem der vorhergehenden Ansprüche,
**dadurch gekennzeichnet, dass**
die erste und die zweite Einlage (1,2) unterschiedliche Festigkeitsträger-Materialien aufweisen.

4. Fahrzeugreifen nach einem der vorhergehenden Ansprüche,
**dadurch gekennzeichnet, dass**
die Festigkeitsträger-Materialien Rayon, Stahl, Polyester und/oder Hybrid-Werkstoffe umfassen.

5. Fahrzeugreifen nach einem der vorhergehenden Ansprüche,
**dadurch gekennzeichnet, dass**
die Festigkeitsträger in der ersten und zweiten Einlage (1,2) in unterschiedlichen Winkellagen angeordnet sind.

6. Fahrzeugreifen nach einem der vorhergehenden Ansprüche,
**dadurch gekennzeichnet, dass**
die jeweils gegenüberliegenden Kernprofile (6) unterschiedliche Materialeigenschaften besitzen.

7. Fahrzeugreifen nach einem der vorhergehenden Ansprüche,
**dadurch gekennzeichnet, dass**
die jeweils gegenüberliegenden Kernprofile (6) unterschiedliche Kernprofil-Höhen besitzen.

## Claims

1. Vehicle tyre with a tread rubber, a breaker belt (4), sidewalls (13), bead cores (5) with a bead filler (6) and with at least two inserts (1, 2) with reinforcing elements, the first and second inserts (1, 2) being positioned off-centre from the radial centre axis (3) of the vehicle tyre in such a way that both one end of the first insert (1) and one end of the second insert (2) respectively wrap around only one bead core (5) on each side of the bead and the respectively opposite ends (9, 10) reach at most into the region next to the bead core (5) on the inner side (11) of the tyre, **characterized in that** the ends (9, 10) of the first and second inserts (1, 2) respectively lying opposite from where said inserts wrap around the bead each end in the region next to the bead core (5), or the bead core assembly comprising the bead core (5) and bead filler (6), on the inner side (11) of the tyre.

2. Vehicle tyre according to Claim 1, **characterized in that** the first and second inserts (1, 2) are two inserts of equal width, these inserts being positioned in the vehicle tyre with an asymmetric centre offset (14) in relation to the radial centre (3) of the tyre.

3. Vehicle tyre according to one of the preceding claims, **characterized in that** the first and second inserts (1, 2) have different materials for the reinforcing elements.

4. Vehicle tyre according to one of the preceding claims, **characterized in that** the materials for the reinforcing elements comprise rayon, steel, polyester and/or hybrid materials.

5. Vehicle tyre according to one of the preceding claims, **characterized in that** the reinforcing elements are arranged in different angular positions in the first and second inserts (1, 2).

6. Vehicle tyre according to one of the preceding claims, **characterized in that** the respectively opposite bead fillers (6) have different material properties.

7. Vehicle tyre according to one of the preceding claims, **characterized in that** the respectively opposite bead fillers (6) have different bead filler heights.

## Revendications

1. Bandage pour roue de véhicule présentant une bande de roulement, une ceinture (4), des parois latérales (13), des âmes de bourrelet (5) dotées d'un profilé d'âme (6) et au moins deux garnitures (1, 2) dotées de renforts,
la première et la deuxième garniture (1, 2) étant disposées en position décentrée par rapport à l'axe central radial (3) du bandage de roue de véhicule de telle sorte qu'une extrémité de la première garniture (1) et une extrémité de la deuxième garniture (2) entourent une seule âme de bourrelet (5) sur chaque côté du bourrelet et que les deux extrémités opposées (9, 10) s'étendent sur le côté intérieur (11) du bandage au plus jusque dans la zone située à côté de l'âme de bourrelet (5),
**caractérisé en ce que**
les extrémités (9, 10) de la première et de la deuxième garniture (1, 2) situées face au rabattement de bourrelet se terminent chacune dans la zone située à côté de l'âme de bourrelet (5) ou de l'ensemble d'âme de bourrelet constitué de l'âme de bourrelet (5) et du profilé d'âme (6) sur le côté intérieur (11) du bandage.

2. Bandage pour roue de véhicule selon la revendication 1, **caractérisé en ce que** la première et la deuxième garniture (1, 2) sont des garnitures de même largeur qui sont disposées dans le bandage de roue de véhicule avec un décalage asymétrique (14) par rapport au milieu radial (3) du bandage.

3. Bandage pour roue de véhicule selon l'une des revendications précédentes, **caractérisé en ce que** la première et la deuxième garniture (1, 2) présentent des renforts en matériaux différents.

4. Bandage pour roue de véhicule selon l'une des revendications précédentes, **caractérisé en ce que** les matériaux des renforts comprennent la rayonne, l'acier, le polyester et/ou des matériaux hybrides.

5. Bandage pour roue de véhicule selon l'une des revendications précédentes, **caractérisé en ce que** les renforts de la première et de la deuxième garniture (1, 2) sont disposés dans des orientations angulaires différentes.

6. Bandage pour roue de véhicule selon l'une des revendications précédentes, **caractérisé en ce que** les matériaux des profilés d'âme (6) mutuellement opposés ont des propriétés différentes.

7. Bandage pour roue de véhicule selon l'une des revendications précédentes, **caractérisé en ce que** les profilés d'âme (6) mutuellement opposés ont des hauteurs différentes.
